# EUROPÄISCHE PATENTSCHRIFT

(11) **EP 1 579 169 B1**
(45) Veröffentlichungstag und Bekanntmachung des Hinweises auf die Patenterteilung: **07.06.2006**
(21) Anmeldenummer: 04765769.7
(22) Anmeldetag: 02.10.2004
(51) Int. Cl.: G01B 11/02, G01N 21/88

(54) **MESSEINRICHTUNG UND MESSVERFAHREN FÜR STIFTE, INSBESONDERE STECKERSTIFTE**
MEASURING DEVICE AND MEASURING METHOD FOR PINS, IN PARTICULAR PLUG PINS
PROCEDE ET DISPOSITIF DE MESURE DE BROCHES, NOTAMMENT DE FICHES

(30) Priorität: 30.10.2003 DE 10350966; 18.02.2004 DE 102004008281
(43) Veröffentlichungstag der Anmeldung: 28.09.2005
(73) Patentinhaber: Vision Tools Bildanalyse Systeme GmbH, 68753 Wäghäusel (DE)
(72) Erfinder: TROPF, Hermann, 68789 St. Leon-Rot (DE); LIEBAU, Robin, 74889 Sinsheim (DE); PFEIFFER, Josef, 76131 Karlsruhe (DE); SCHULZ, Peter, 67105 Schifferstadt (DE); VIEBIG, Klaus, 69207 Sandhausen (DE); ZANG, Klaus, 68789 St. Leon-Rot (DE)
(74) Vertreter: Lempert, Jost
(86) Internationale Anmeldenummer: PCT/EP2004/011016
(87) Internationale Veröffentlichungsnummer: WO 2005/052508

(56) Entgegenhaltungen:
- US-A- 4 696 047
- US-A- 5 121 438
- US-A- 5 127 727

## Beschreibung

Die Erfindung betrifft eine Vorrichtung zur berührungslosen Kontrolle der Anordnung von freien Stiftenden von Stiften, insbesondere Steckerstiften, mit mindestens einem Bildaufnahmemittel nach dem Oberbegriff des Anspruchs 1 und ein Verfahren zur Kontrolle der Stiftenden von Stiften nach dem Oberbegriff des Anspruchs 16.

Bei elektrischen Steckverbindungen unterscheidet man Stiftleisten oder Messerleisten von Buchsenleisten. Ein Problem bei der Produktion der Stiftleisten ist die Einhaltung der Stiftgeometrie; Verbinder mit nur geringfügig verbogenen Stiften passen nicht in die Buchsenleisten.

Automatische Prüfeinrichtungen mit mechanischen Lehren sind insofern kritisch, als sich verbogene Stifte von selbst in die Schablone einfädeln können, außerdem kann es bei verbogenen Stiften immer wieder zu Verklemmungen und damit zu Maschinenstörungen kommen. Man versucht deshalb, die Position der Stifte am freien Ende der Stifte berührungslos zu kontrollieren; hierzu wird am freien Ende des Stifts der Mittelpunkt des Stiftquerschnitts, insbesondere die Spitzen des Stifts vermessen, gesehen in Stiftlängsachse. Je nach Situation sind auch die Außenmaße des Stifts am freien Ende des Stifts zu kontrollieren.

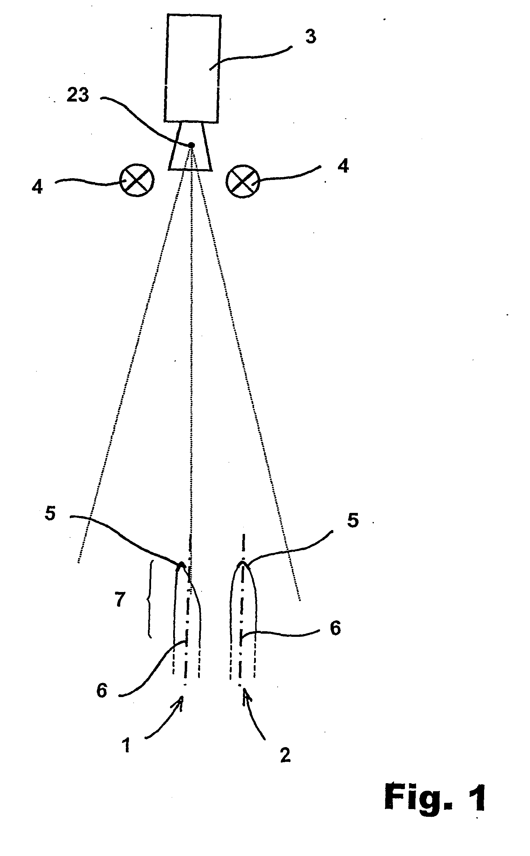

Die berührungslose Auswertung mit Bildverarbeitungssystemen mit Blickrichtung längs der Stiftachsen und Darstellung der Enden der Stifte im Bild im Auflicht ist insofern schwierig, als die Enden der Stifte geometrisch sehr unterschiedlich ausgeprägt sein können und sich deshalb im Auflicht nur sehr instabil darstellen. Zur Erläuterung dieser Problematik sei hier auf Fig. 1 verwiesen. Eine Vermessung der Reflexposition im Auflicht, zur Vermessung der Position der Stiftspitze, ist somit unvermeidlich fehlerbehaftet. Eine Alternative wäre eine homogene Raumbeleuchtung; diese ist jedoch je nach Steckergeometrie sehr aufwändig und nimmt viel Platz ein, außerdem sind bei einer solchen Anordnung die Kontraste gering und stark hintergrundabhängig. Ein solches System ist beispielsweise in US-A-5121438 beschrieben.

Anordnungen im Durchlicht hingegen sind bei nichttransparentem Steckergehäuse, was der Regelfall ist, nicht möglich. Die Betrachtung quer zu den Stiftachsen verbietet sich in einer Vielzahl von Fällen schon dadurch, dass die Stifte im Innern eines Steckergehäuses sitzen: Weder die Betrachtung noch die Beleuchtung kann daher seitlich erfolgen. In den verbleibenden Fällen müssen die Stifte aus zwei Richtungen, also mit zwei Kameras betrachtet werden, um eine Lagekontrolle der Stiftspitzen in zwei Koordinaten senkrecht zur Stiftachse zu gewährleisten.

Die US 5,127,727 A zeigt eine Vorrichtung zum Untersuchen von sich auf einem gedruckten Schaltkreisträger erstreckenden Stiften. Die Vorrichtung weist eine ringförmige Lichtquelle auf, die den die Stifte tragenden Träger beleuchtet. Es ist weiterhin zentral innerhalb der ringförmigen Lichtquelle ein mit einer Kamera fluchtendes zylinderförmiges Teil vorgesehen, dessen freies unteres Ende zur Messung eines Einzelstifts über einen solchen gestülpt wird, so dass dessen Oberfläche über der Lichtquelle abgedunkelt ist.

Aufgabe der Erfindung ist es somit, eine sichere berührungslose Kontrolle von Stiften, insbesondere Steckerstiften zu ermöglichen.

Diese Aufgabe wird erfindungsgemäß gelöst durch eine gattungsgemäße Vorrichtung mit den kennzeichnenden Merkmalen des Anspruchs 1.

Zur Lösung der Aufgabe sieht die Erfindung weiter ein gattungsgemäßes Verfahren mit den kennzeichnenden Merkmalen des Anspruchs 16 vor.

Die Bildaufnahmeeinrichtung, insbesondere eine Kamera, blickt durch die Durchbrüche in der Maske und Aussparungen in der Beleuchtungseinrichtung, im Folgenden Blickkanäle genannt, auf die Steckerstifte, die in die Blickkanäle hineinragen können. Die Maske und die Beleuchtungseinrichtung müssen somit in ihren mechanischen Abmessungen an den jeweiligen Stecker angepasst sein, also das Raster der Durchbrüche der Maske und der Blickkanäle dem Stiftraster des Steckers entsprechen. Durch diese Anordnung der Beleuchtungseinrichtung und der Maske ist eine Beleuchtung des Steckers quasi im Durchlicht möglich, so dass das freie Stiftende dunkel gehalten wird und ein weiter entfernt zur Maske liegender Bereich von dem Stift aufgehellt wird. Dabei ist es wichtig, dass der Hohlraum des Steckers durch die Beleuchtungseinrichtung diffus und gleichmäßig ausgeleuchtet wird. Steckerstifte erscheinen dann im Bild der Kamera schwarz, umgeben von einer hellen Zone, die durch die Durchbrüche in der Maske erzeugt werden, wiederum umgeben von einem dunklen Bereich, der durch die Maske selbst erzeugt wird. Bei optimaler Ausrichtung von Beleuchtungseinrichtung und Maske gegenüber dem Stecker erscheinen die Stifte auf dem Bild der Kamera, sofern sie nicht deformiert sind, zentral im hellen Bereich der Durchbrüche der Maske. Der Kontrast ist dabei direkt davon abhängig, wie viel Licht seitlich in die Blickkanäle eintreten kann. Daher kann eine Kontrastverbesserung dadurch erreicht werden, dass die Innenwandung der Blickkanäle zumindest teilweise mit einer nicht-lichtdurchlässigen Schicht bedeckt sind.

Bei einer anderen Ausführüngsform des erfindungsgemäßen Verfahrens ist vorgesehen, dass das freie Stiftende des Stifts beleuchtet und aufgehellt wird, und ein weiter entfernt zur Maske liegender Bereich in dem Stift dunkel gehalten wird. Vorrichtungsmäßig ist hier die Beleuchtungseinrichtung so gestaltet, dass das Licht nicht den Steckerinnenraum gleichmäßig ausleuchtet, sondern zum größten Teil in den Blickkanälen der Beleuchtungseinrichtung austritt, und damit vor allem die freien Stiftenden bzw. die Stifte beleuchtet. Dazu wird die der Kamera abgewandte Seite der Beleuchtungseinrichtung mit einer licht-undurchlässigen Schicht bedeckt, so dass hier kein Licht aus der Beleuchtungseinrichtung in das Steckerinnere gelangen kann. An der Oberseite befindet sich wie zuvor eine Maske mit entsprechenden Durchbrüchen.

Besonders bevorzugt ist die Beleuchtungseinrichtung aus einer transparenten, vorzugsweise planparallelen Platte gefertigt, die aus einem lichtleitenden Material, vorzugsweise Acrylglas mit Löchern als Blickkanälen besteht.

Zur gleichmäßigen Ausleuchtung des Steckerinneren ist die planparallele Platte an ihrer Unterseite strukturiert, um ein gleichmäßiges und kontrolliertes Auskoppeln des Lichts zu gewährleisten.

Die Maske wird vorzugsweise auf die Platte aufgebracht, indem diese geschwärzt wird. Ebenso die licht-undurchlässige Schicht an der Unterseite der Platte durch Schwärzen derselben erstellt werden.

Besonders bevorzugt sind Leuchtelemente, vorzugsweise Leuchtdioden, in die Platte integriert.

Die Aussparungen, die als Blickkanäle in der planparallelen Platte dienen, sind vorteilhaft auf das Projektionszentrum der Kamera ausgerichtet. Dadurch wird gewährleistet, dass bei korrekter Konstruktion und Ausrichtung der Maske, der planparallelen Platte und der Steckerstifte Letztere in Optimallage im Bild der Kamera zentrisch in den Öffnungen erscheint. Dies erleichtert die Bildauswertung ungemein.

Bei einer weiteren Ausführungsform ist vorgesehen, dass die Abbildung der Durchbrüche der Maske und der Stifte telezentrisch ist. Dadurch ist wie oben gewährleistet, dass die Steckerstifte in Optimallage im Bild der Kamera zentrisch in den Durchbrüche erscheinen. Bei einer besonders bevorzugten Ausführungsform haben die Blickkanäle in der planparallelen Platte eine Weite größer als die der Durchbrüche in der Maske. Die Blickkanäle können dann als einfache Bohrungen oder Langlöcher ausgeführt werden, was die Herstellung stark vereinfacht. Außerdem wird dadurch erreicht, dass sich die Kanten der Maskendurchbrüche im Bild der Kamera nicht darstellen. Dies hat den Vorteil, dass bei der Bildauswertung die Stifte isoliert erscheinen, d.h. im Bild der Kamera keine Außenobjekte berühren.

Vorteilhaft ist zumindest ein Durchbruch in der der Kamera zugewandten Seite der Maske angebracht, durch den Licht in die Kamera gelangen kann. Damit kann eine Positionsreferenzierung bei der Bildauswertung erfolgen, wodurch mechanische Änderungen der Anordnung der Kamera automatisch kompensiert werden.

Besonders bevorzugt sind die Komponenten der Vorrichtung, wie Kamera, Maske und Beleuchtungseinrichtung mechanisch miteinander verbunden und bilden einen Prüfkopf. Dieser wird zur Prüfung mechanisch an den Stecker herangeführt und in Prüfposition gebracht, je nach Steckergeometrie vorzugsweise über einen mechanischen Anschlag oder Indexierstifte oder Ähnliches. Natürlich kann auch umgekehrt der Stecker an den Prüfkopf herangeführt werden.

Bei einem Verfahren zur Kontrolle von Steckerstiften mit einer Vorrichtung, wie sie oben beschrieben wurde, wird das Bild entweder automatisch durch ein Bildanalysesystem oder manuell, wie z.B. bei Profilprojektoren üblich, ausgewertet, wobei vorzugsweise die Position der Abbildung der Stifte relativ zur Abbildung der Öffnungen bewertet wird.

Bei einem besonders bevorzugten Verfahren wird wie oben das Bild der Kamera ausgewertet, wobei hier die Position der Abbildung der freien Stiftenden relativ zur Abbildung der sich zusätzlich in der Maske befindenden Durchbrüchen bewertet wird.

Weitere Eigenschaften und Vorteile der Erfindung ergeben sich aus der nachfolgenden Beschreibung von Ausführungsbeispielen anhand der Zeichnungen. Es zeigt bzw. zeigen:
- Fig. 1: eine schematische Darstellung der Problematik des Standes der Technik;
- Fig. 2: eine schematische Darstellung eines Ausführungsbeispiel der erfindungsgemäßen Vorrichtung, bei dem die Stifte dunkel erscheinen;

- Fig. 3: eine schematische Darstellung eines weiteren Ausführungsbeispiel der erfindungsgemäßen Vorrichtung, bei dem die Stifte hell erscheinen;
- Fig. 4: eine schematische Darstellung eines weiteren Ausführungsbeispiel der erfindungsgemäßen Vorrichtung;
- Fig. 5: eine schematische Darstellung eines weiteren Ausführungsbeispiel der erfindungsgemäßen Vorrichtung; und
- Fig. 5a,b: verschiedene schematische Darstellungen von Möglichkeiten der Einkopplung des Lichts in die Beleuchtungseinrichtung.

Die Fig. 1 zeigt die Problematik des Standes der Technik. Es sind beispielhaft zwei Stifte 1, 2 dargestellt. Das freie spitzenförmige Stiftende 5 des Stifts 1 weicht von seiner durch die Stiftachse 6 gegebene Normposition ab. Mit Abstand zu den Stiften 1, 2 ist eine Kamera 3 angeordnet, neben der die Stifte 1, 2 beleuchtete Beleuchtungseinrichtungen 4 angeordnet sind. Das von den Stiften 1 und 2 reflektierte Licht wird als Reflexe von der Kamera 3 aufgenommen.

Die Problematik dieses Standes der Technik stellt sich wie folgt dar: Die Position des Reflexes der freien Stiftenden wird relativ zur Stiftachse 6 vermessen. Bei verbogenen Stiften liegt somit der Reflex nicht auf der Stiftachse 6. Je nach Ausführung des Spitzenbereichs 7 der Stifte 1 bzw. 2 kann es vorkommen, dass ein völlig gerader Stift, wie der hier dargestellte Stift 1, aufgrund seiner Spitzenform vom System als verbogen erkannt wird.

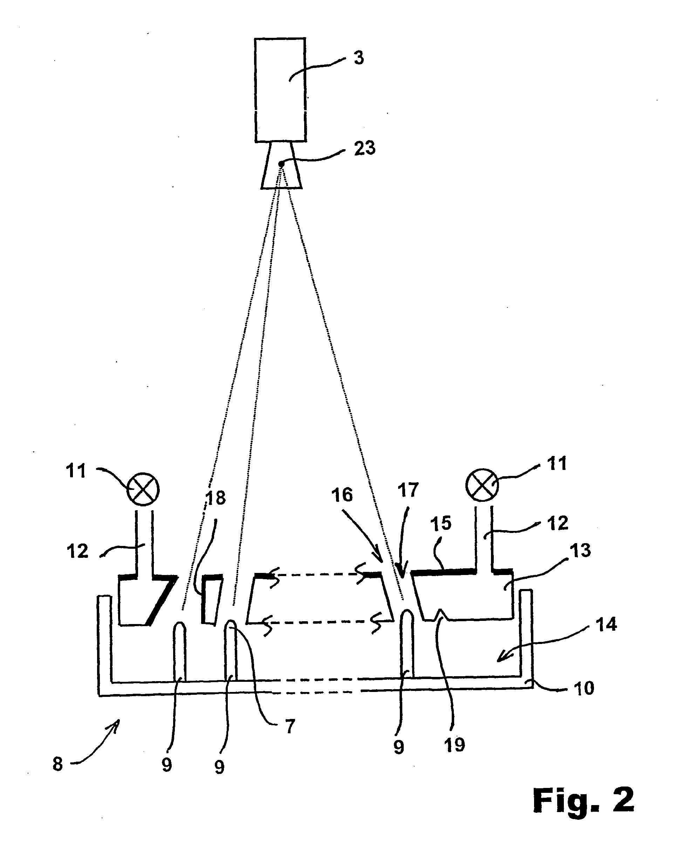

Die Fig. 2 zeigt eine erste Ausführungsform der erfindungsgemäßen Vorrichtung zur berührungslosen Kontrolle der Anordnung von feinen Stiftenden. Es ist eine Bildaufnahmeeinrichtung 3 in Form einer Kamera mit einem Projektionszentrum 23 vorgesehen.

Mit Abstand zur Bildaufnahmeeinrichtung 3 ist eine an sich intransparente Maske 15 mit Durchbrüchen 16 vorgesehen, die im dargestellten Ausführungsbeispiel auf einem Träger 13 angeordnet ist. Dieser weist, den Durchbrüchen 16 der Maske 15 zugeordnet, Blickkanäle 17 auf, deren Achse auf das optische Zentrum 23 der Bildaufnahmeeinrichtung 3 gerichtet sind. Die Bildaufnahmeeinrichtung 3 kann durch die Blickkanäle 17 im Träger 13 auf die freien Enden 7 von Stiften 9 eines Steckers 8, der ein Gehäuse 10 aufweist, blicken. Der Träger ragt teilweise in den vom Gehäuse 10 umgebenen Bereich 14 des Steckers 8 hinein. Im dargestellten Ausführungsbeispiel der erfindungsgemäßen Vorrichtung sind die Blickkanäle 14, wie in Fig. 2 lediglich teilweise dargestellt ist, auf ihrer Innenwandung mit einer nicht-transparenten Schicht 18 versehen. Die Unterseite des Trägers 13 ist strukturiert, beispielsweise durch Kerben 19, um ein gezieltes Auskoppeln von Licht aus dem Träger 13 zu gewährleisten.

Die Funktionsweise dieser Ausführungsform der erfindungsgemäßen Vorrichtung stellt sich wie folgt dar: Licht von den Leuchtelemente 11 wird über die Lichtleiter 12 in den transparenten Träger 13 eingekoppelt. Die strukturierte Unterseite des Trägers 13 sorgt für eine gezielte Auskopplung des Lichts, so dass der Steckerinnenraum 14 des Steckers 8 gleichmäßig und diffus ausgeleuchtet ist. Die licht-undurchlässige Maske 15 schirmt dabei die Kamera 3 vor unnötigem Streulicht ab. Die in die Blickkanäle 17 hineinragenden freien Enden der Stifte 9 werden wenig beleuchtet und erscheinen daher dunkel gegenüber dem hellen Innenraum 14 des Steckers 8 und sind von einer hellen Zone, dem Bild der Durchbrüche 16 umgeben, die wiederum von einer dunklen Zone, dem Bild der Maske 15, umgeben ist. Zur Verbesserung des Kontrasts kann mit einer nicht-transparenten Schicht 18 auf der Innenwandung der Blickkanäle 17 verhindert werden, dass hier Licht aus dem Träger 13 ausgekoppelt wird und die Stifte 9 in den Blickkanälen 17 beleuchtet. Die Trägerplatte 13 mit der Maske 15 wird dann gegenüber den Stiften 9 ausgerichtet und die Position der Stifte relativ zu den Öffnungen 16 der Maske vermessen. Verbogene Stifte 9 stellen sich als nicht-zentrale dunkle Stellen in den jeweiligen hellen Öffnungen 16 dar.

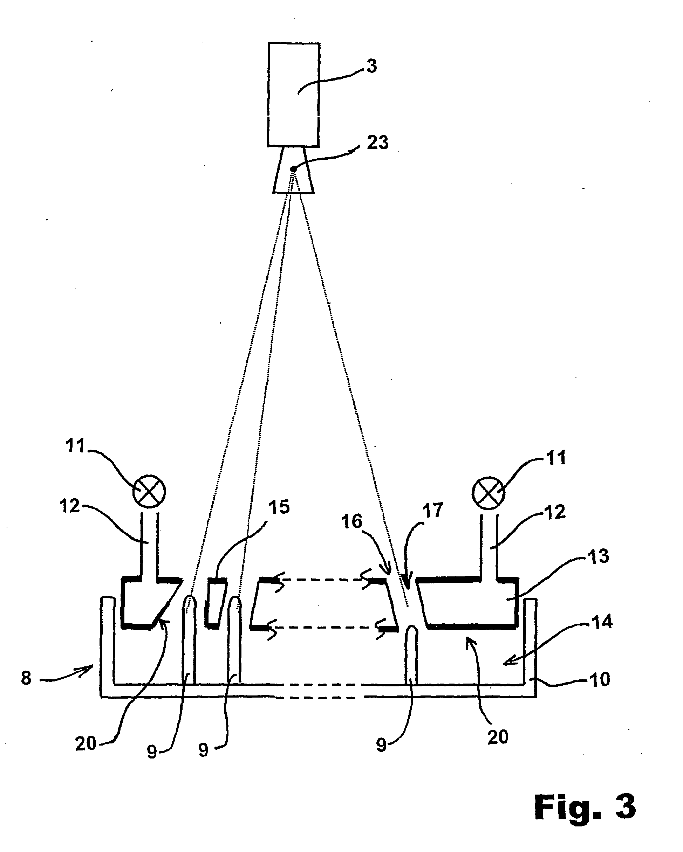

Fig. 3 zeigt eine andere Ausführungsform der erfindungsgemäßen Vorrichtung. Soweit Übereinstimmung mit der Ausgestaltung der Fig. 2 besteht, wird im Folgenden hinsichtlich der weiteren Figuren insofern auf die vorstehende Beschreibung verwiesen. Im Unterschied zu Fig. 2 ist hier an der Unterseite des Trägers 13 zusätzlich eine licht-undurchlässige Schicht 20 angebracht, so dass der Innenraum 14 des Steckers 8 nicht ausgeleuchtet wird. Um eine bessere Abdunklung des Steckerinnenraums 14 zu erreichen, sind die Blickkanäle 17 in ihrem unteren Bereich ebenfalls mit einer licht-undurchlässigen Schicht 21 abgedeckt, während sie im oberen Bereich nicht abgedeckt sind.

Die Funktionsweise dieser Ausführungsform der erfindungsgemäßen Vorrichtung stellt sich wie folgt dar: Wie oben beschrieben, wird Licht aus dem Träger ausgekoppelt, aber im Unterschied zu Fig. 2 gelangt das Licht nur in die Blickkanäle 17, in denen sich zumindest teilweise die Stifte 9 befinden. Hier werden also nur die freien Enden oder Spitzen der Stifte 9 beleuchtet, so dass diese als helle Stellen vor einem dunklen Hintergrund erscheinen und somit ebenfalls ausgemessen werden können.

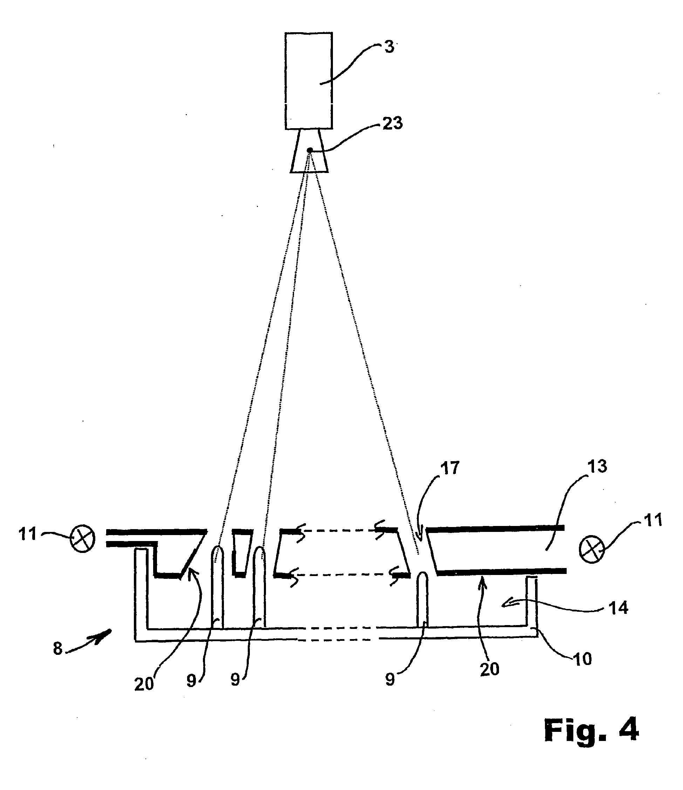

Bei der Ausgestaltung der Fig. 4 dient als Träger 13 eine planparallele transparente Platte, die an die mechanischen Abmessungen des Steckergehäuses 10 angepasst ist. Im Unterschied zu den vorhergehenden Ausführungsformen wird hier das Licht von den Lichtquellen oder Lichtelemente 11 seitlich ohne die Lichtleiter 12 direkt in die als Träger 13 dienende Platte eingekoppelt. An der Unterseite des Trägers 13 kann sich eine licht-undurchlässige Schicht 20 befinden, die sich auch teilweise in die Kanäle 17 hinein fortsetzt.

Die Funktionsweise der erfindungsgemäßen Vorrichtung der Fig. 4 stellt sich wie folgt dar: Licht wird an Plattenrändern von den Leuchtelementen 11 in den Träger 13, der als planparallele, transparente Platte ausgebildet ist, eingekoppelt. Aufgrund der Winkelbedingungen koppelt das Licht hauptsächlich an den Blickkanälen 17 aus der Platte aus, während an der Oberseite der Platte aufgrund der Totalreflexion kaum Licht austritt. Hier kann also im Unterschied zu den vorherigen Ausführungsformen auf eine zusätzliche Maske an der Oberseite des Trägers 13 verzichtet werden. Auch hier erscheinen wieder wie bei der Ausführungsform von Fig. 3 die Stifte als helle Flecke vor dunklem Hintergrund.

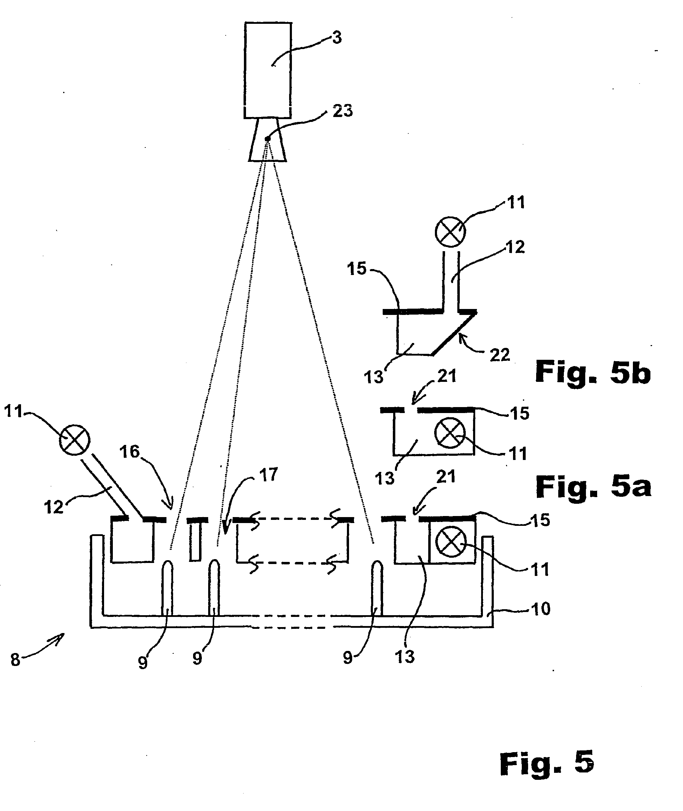

Eine besonders bevorzugte Ausführungsform ist in Fig. 5 dargestellt. Die Maske 15 ist als Durchbrüche 16 aufweisende opake, vorzugsweise dünne Schicht auf eine planparallele Platte 13 aufgebracht. Diese planparallele Platte hat Kanäle 17 mit einer Weite größer als die der Maske, wobei die Kanäle 17 der Platte 13 zu der Stiftachse parallele Wandungen haben. Zusätzlich befindet sich in der Maske 15 auf der der Kamera 3 zugewandten Seite der Platte 13 wenigstens ein Durchbruch 21.

Die Funktionsweise der erfindungsgemäßen Vorrichtung der Fig. 5 stellt sich analog zu Fig. 2 dar, wobei der Durchbruch Öffnung 21, durch welche Licht in die Kamera 3 gelangen kann, zur Positionsreferenzierung bei der Bildauswertung dient. Damit können mechanische Änderungen der Anordnung der Kamera 3 automatisch kompensiert werden. Ein weiterer Vorteil der Vorrichtung gemäß Fig. 5 sind die günstigen Herstellungskosten der Platte 13, da hier nur Bohrungen oder Langlöcher senkrecht zur Oberfläche der Platte 13 in diese gebohrt werden müssen. Zusätzlich vereinfacht diese Anordnung mit über die Kanäle 17 überstehender Maske 15 die Bildauswertung, da die Stifte isoliert erscheinen und im Bild keine Außenobjekte berühren können.

Licht kann auf verschiedenste Art und Weise in den Träger 13 eingekoppelt werden, zum einen wie in Fig. 2 dargestellt, mit senkrecht stehendem Lichtleiter zwischen Leuchteinrichtung 11 und Träger 13, zum anderen wie in Fig. 5 links dargestellt, mit schräg gestelltem Lichtleiter 12 oder von der Seite wie in Fig. 4 bzw. Fig. 5 rechts dargestellt.

Weiter Möglichkeiten sind in Fig. 5a und 5b dargestellt. So ist in Fig. 5a die Leuchteinrichtung, z.B. eine LED, direkt in den Träger 13 integriert.

Fig. 5b zeigt eine Anordnung, bei der das Licht von der Leuchteinrichtung 11 über einen Lichtleiter 12 und eine als Umlenkspiegel dienende Fläche 22 in den Träger 13 eingekoppelt wird. Weitere Möglichkeiten zur Beleuchtung sind zum einen das Einbringen einer Leuchtfolie an der Unterseite der Maske bzw. des Trägers oder den Träger aus aktiv leuchtendem Material zu fertigen.

Für alle in den Figuren 2 ff dargestellten Ausführungsformen gilt, dass vorteilhafterweise die Verschiebung relativ zur Abbildung der Durchbrüche der Maske gemessen wird, womit automatisch mechanische Änderungen der Bildaufnahmeeinrichtung kompensiert werden. Des weiteren müssen die Blickkanäle 17 ausreichend bemessen werden, damit die Prüfung der Stifte 9 sicher berührungslos erfolgt, wobei sich die Kanäle 17 vorzugsweise in Richtung der Stifte aufweiten, wie es in den Fig. 3 bis 4 für den linken Stift angedeutet ist. Auch müssen die freien Enden der Stifte 9 in Optimallage nicht notwendigerweise in der Mitte der Kanäle liegen. Vorzugsweise sind die Öffnungen 16 kreisrund und die freien Enden der Stifte 9 werden, wenn sie sich in Normallage befinden, in der Mitte des Kreises, der durch den jeweiligen Durchbruch 16 gebildet wird, abgebildet.

In Fig. 3 und 4 kann, wie in Fig. 5, aufgrund Totalreflexion die Abdeckung 20 weggelassen werden.

Da sich die freien Enden der Stifte 9 und Durchbrüche 16 auf unterschiedlichen Ebenen befinden, kann dies mit einer telezentrischen Abbildung oder einfacher und preiswerter durch Orientierung der Blickkanäle 17 zum Projektionszentrum 23 der Bildaufnahmeeinrichtung erreicht werden. Dies gilt natürlich auch für den Fall, dass mehrere Kameras eingesetzt werden, wobei dann die jeweiligen Blickkanäle 17 in Richtung des Projektionszentrums 23 der für sie zuständigen Kamera ausgerichtet sind.

Die erfindungsgemäße Vorrichtung kann vorzugsweise als Prüfkopf ausgeführt sein, bei dem Kamera 3, Maske 15 und Beleuchtung 13 mit Leuchtelemente 11 mechanisch miteinander verbunden sind. Ein solcher Prüfkopf wird zur Prüfung an den Stecker 8 herangeführt und in Prüfposition gebracht, je nach Steckergeometrie vorzugsweise über einen (nicht gezeichneten) mechanischen Anschlag, Indexierstifte oder Ähnliches. Natürlich kann auch umgekehrt der Stecker an den Prüfkopf herangeführt werden.

### Bezugszeichenliste

- 1: Stift
- 2: Stift
- 3: Bildaufnahmeeinrichtung
- 4: Leuchtmittel
- 5: Reflex
- 6: Stiftachse
- 7: freie Enden
- 8: Stecker
- 9: Stift
- 10: Steckergehäuse
- 11: Leuchtmittel
- 12: Lichtleiter
- 13: Beleuchtungseinrichtung
- 14: Steckerinnenraum
- 15: Maske
- 16: Durchbrüche in der Maske
- 17: Blickkanal
- 18: nicht-transparente Schicht
- 19: Kerbe
- 20: licht-undurchlässige Schicht
- 21: Durchbruch
- 22: Umlenkspiegel
- 23: Projektionszentrum

## Patentansprüche

1. Vorrichtung zur berührungslosen Kontrolle der Anordnung von freien Stiftenden (7) von Stiften (9), insbesondere Steckerstiften, mit mindestens einer Bildaufnahmeeinrichtung (3), **gekennzeichnet durch**
- eine Maske (15), mit Durchbrüchen (16), **durch** die mit der zumindest einen Bildaufnahmeeinrichtung (3) ein Bild der Stiftenden (7) aufnehmbar ist; und
- eine Beleuchtungseinrichtung (13) auf der der Bildaufnahmeeinrichtung (3) abgewandten Seite der Maske (15).

2. Vorrichtung nach Anspruch 1, **dadurch gekennzeichnet, dass** die Beleuchtungseinrichtung (13) so gestaltet ist, dass die Stiftenden (7) in den Durchbrüchen (16) der Maske (15) zugeordneten Blickkanälen (17) für die Bildaufnahmemittel (3) dunkel gegen den Hintergrund erscheinen.

3. Vorrichtung nach Anspruch 2, **dadurch gekennzeichnet, dass** die Blickkanäle (17) an einer sie bildenden Innenwandung zumindest teilweise nicht transparent sind.

4. Vorrichtung nach Anspruch 1, **dadurch gekennzeichnet, dass** die Beleuchtungseinrichtung (13) so gestaltet ist, dass die Stiftenden (7) hell gegen den Hintergrund erscheinen.

5. Vorrichtung nach einem der Ansprüche 1 bis 4, **dadurch gekennzeichnet, dass** die Beleuchtungseinrichtung (13) eine transparente, vorzugsweise planparallele Platte, vorzugsweise aus Acrylglas, mit Durchbrüchen (16) ist.

6. Vorrichtung nach Anspruch 5, **dadurch gekennzeichnet, dass** sich auf der der Bildaufnahmeeinrichtung (3) zugewandten Seite der Platte (13) nicht oder gering lichtdurchlässiges Material befindet (15), das vorzugsweise direkt auf die Platte (13) aufgebracht ist.

7. Vorrichtung nach Anspruch 5 oder 6, **dadurch gekennzeichnet, dass** die Platte (13) an ihrer Unterseite strukturiert ist.

8. Vorrichtung nach Anspruch 5 oder 6, **dadurch gekennzeichnet, dass** sich auf der von der Bildaufnahmeeinrichtung (3) abgewandten Seite der Platte (13) nicht oder gering lichtdurchlässiges Material (20) befindet, das vorzugsweise direkt auf die Platte (13) aufgebracht ist.

9. Vorrichtung nach einem der Ansprüche 5 bis 8, **dadurch gekennzeichnet, dass** Leuchtmittel (11) in der Platte (13) integriert sind.

10. Vorrichtung nach einem der Ansprüche 5 bis 9, **dadurch gekennzeichnet, dass** in der Platte (13) Blickkanäle (17) auf das jeweilige Projektionszentrum (23) der Bildaufnahmeeinrichtung (3) ausgerichtet sind.

11. Vorrichtung nach einem der vorangehenden Ansprüche, **dadurch gekennzeichnet, dass** die Durchbrüche (16) und die Stiftenden (7) so ausgerichtet sind, dass die Stiftenden (7) in Optimallage im Bild der Bildaufnahmeeinrichtung (3) zentrisch in den Durchbrüchen (16) erscheinen.

12. Vorrichtung nach einem der vorangehenden Ansprüche, **dadurch gekennzeichnet, dass** die Abbildung der Öffnungen (16) und der Stiftenden (7) auf die Bildaufnahmeeinrichtung (3) telezentrisch ist.

13. Vorrichtung nach einem der Ansprüche 5 bis 12, **dadurch gekennzeichnet, dass** Blickkanäle (17) in der Platte (13) eine größere Weite als die Durchbrüche (16) der Maske (15) aufweisen.

14. Vorrichtung nach einem der Ansprüche 1 bis 13, **dadurch gekennzeichnet, dass** sich mindestens ein, bevorzugt zwei, Durchbrüche (21) als Referenzmarker in der der Bildaufnahmeeinrichtung zugewandten Seite der Maske (15) befindet bzw. befinden, durch die Licht der Beleuchtungseinrichtung (13) direkt in das Bildaufnahmemittel (3) gelangt.

15. Vorrichtung nach einem der Ansprüche 1 bis 14, **dadurch gekennzeichnet, dass** die Komponenten der Vorrichtung, wie Bildaufnahmeeinrichtung (3), Maske (15) und Beleuchtungseinrichtung (13), mechanisch miteinander verbunden sind und eine Relativbewegung zwischen diesen mechanisch verbundenen Komponenten und den zu kontrollierenden Stiftenden (7) möglich ist.

16. Verfahren zur Kontrolle der Stiftenden (7) von Stiften (9), vorzugsweise Steckerstiften, insbesondere mit einer Vorrichtung nach einem der Ansprüche 1 bis 15, wobei die Position des freien Stiftendes mindestens eines Stifts aufgenommen wird, **dadurch gekennzeichnet, dass** die Aufnahme von einer ersten Seite einer Maske durch einen Durchbruch in der Maske erfolgt, auf deren anderer Seite sich der Stift hinter dem Durchbruch befindet und dass auf dieser anderen Seite eine Beleuchtung/Aufhellung erfolgt.

17. Verfahren nach Anspruch 16, **dadurch gekennzeichnet, dass** das freie Stiftende dunkel gehalten wird und ein weiter entfernt zur Maske liegender Bereich von dem Stift aufgehellt wird.

18. Verfahren nach Anspruch 16, **dadurch gekennzeichnet, dass** das freie Stiftende des Stifts beleuchtet und aufgehellt wird, und ein weiter entfernt zur Maske liegender Bereich in dem Stift dunkel gehalten wird.

19. Verfahren nach einem der Ansprüche 16 bis 18, **dadurch gekennzeichnet, dass** die Position der Abbildung der Stiftspitzen (7) relativ zur Abbildung der Öffnungen (17) bewertet wird.

20. Verfahren nach einem der Ansprüche 16 bis 18, **dadurch gekennzeichnet, dass** die Position der Abbildung der Stiftspitzen (7) relativ zur Abbildung zusätzlich in der Maske (15) angebrachter Öffnungen (17) bewertet wird.

## Claims

1. Device for the contactless inspection of the arrangement of free ends (7) of pins (9), particularly plug pins, having at least one image sensor (3),
**characterized by**
- a mask (15) with openings (16) through which an image of the pin ends (7) can be recorded with the at least one image sensor (3) and
- a lighting unit (13) on the side of mask (15) remote from the image sensor (3) .

2. Device according to claim 1, **characterized in that** the lighting unit (13) is designed in such a way that the pin ends (17) appear dark against the background in the openings (16) of mask (15) of associated viewing channels (17) for the image sensor (3).

3. Device according to claim 2, **characterized in that** the viewing channels (17) are at least partly not transparent on an inner wall forming them.

4. Device according to claim 1, **characterized in that** the lighting unit (13) is designed in such a way that the pin ends (7) appear bright against the background.

5. Device according to one of the claims 1 to 4, **characterized in that** the lighting unit (13) is a transparent, preferably plane-parallel plate, preferably of plexiglass and having openings (16).

6. Device according to claim 5, **characterized in that** on the side of plate (13) facing the image sensor (3) is provided not or slightly translucent material (15), which is preferably applied directly to the plate (13).

7. Device according to claim 5 or 6, **characterized in that** the underside of plate (13) is structured.

8. Device according to claim 5 or 6, **characterized in that** on the side of plate (13) remote from the image sensor (3) is provided not or slightly translucent material (20), which is preferably applied directly to the plate (13).

9. Device according to one of the claims 5 to 8, **characterized in that** illuminants (11) are integrated into the plate (13).

10. Device according to one of the claims 5 to 9, **characterized in that** in plate (13) viewing channels (17) are oriented towards the particular projection centre (23) of the image sensor (3).

11. Device according to one of the preceding claims, **characterized in that** the openings (16) and pin ends (7) are oriented in such a way that the pin ends (7) in the optimum position in the image of the image sensor (3) appear centrally in the openings (16).

12. Device according to one of the preceding claims, **characterized in that** the imaging of the openings (16) and pin ends (7) on image sensor (3) is telecentric.

13. Device according to one of the claims 5 to 12, **characterized in that** the viewing channels (17) in plate (13) have a greater width than the openings (16) of mask (15).

14. Device according to one of the claims 1 to 13, **characterized in that** at least one and preferably two openings (21) are located as reference markers in the side of mask (15) facing the image sensor and through which the light of lighting unit (13) passes directly into the image sensor (3).

15. Device according to one of the claims 1 to 14, **characterized in that** the components of the device, such as image sensor (3), mask (15) and lighting unit (13), are mechanically interconnected and a relative movement is possible between said mechanically connected components and the pin ends (7) to be inspected.

16. Method for the inspection of ends (7) of pins (9), preferably plug pins, particularly with a device according to one of the claims 1 to 15, the position of the free end of at least one pin being recorded, **characterized in that** the recording takes place from a first side of a mask through an opening in the latter and on the other side the pin is located behind the opening and that on said other side an illumination/brightening takes place.

17. Method according to claim 16, **characterized in that** the free pin end is kept dark and a pin area further from the mask is illuminated.

18. Method according to claim 16, **characterized in that** the free pin end is illuminated and brightened and an area in the pin further from the mask is kept dark.

19. Method according to one of the claims 16 to 18, **characterized in that** the position of the imaging of the pin ends (7) relative to the imaging of the openings (16) is evaluated.

20. Method according to one of the claims 16 to 18, **characterized in that** the position of the imaging of the pin ends (7) relative to the imaging of additional openings (16) in mask (15) is evaluated.

## Revendications

1. Dispositif de contrôle sans contact de la disposition d'extrémités libres (7) de broches (9), notamment de broches de connexion, comportant au moins un dispositif d'enregistrement d'images (3), **caractérisé par**
. un masque (15) à perforations (16) à travers lesquelles il est possible d'enregistrer une image des extrémités de broche (7) au moyen d'au moins un dispositif d'enregistrement d'images (3), et
. un dispositif d'éclairage (13) sur la face du masque (15) opposée au dispositif d'enregistrement d'images (3).

2. Dispositif selon la revendication 1, **caractérisé en ce que** le dispositif d'éclairage (13) est conçu de telle façon que dans les canaux de vision (17) pour les moyens d'enregistrement d'images (3) associés aux perforations (16) du masque (15), les extrémités (7) des broches apparaissent sombres par rapport au fond.

3. Dispositif selon la revendication 2, **caractérisé en ce que** les canaux de vision (17) sont au moins partiellement obscurs sur une paroi interne les constituant.

4. Dispositif selon la revendication 1, **caractérisé en ce que** le dispositif d'éclairage (13) est conçu de telle façon que les extrémités (7) des broches apparaissent claires par rapport au fond.

5. Dispositif selon l'une quelconque des revendications 1 à 4, **caractérisé en ce que** le dispositif d'éclairage (13) est une plaque transparente avec des perforations (16), de préférence à faces planes et parallèles, de préférence en verre acrylique.

6. Dispositif selon la revendication 5, **caractérisé en ce que** sur la face de la plaque (13) en regard du dispositif d'enregistrement d'images (3) on trouve un matériau (15) pas ou peu perméable à la lumière, appliqué de préférence directement sur la plaque (13.).

7. Dispositif selon la revendication 5 ou 6, **caractérisé en ce que** la plaque (13) est structurée sur sa face inférieure.

8. Dispositif selon la revendication 5 ou 6, **caractérisé en ce que** sur la face de la plaque (13) opposée au dispositif d'enregistrement d'images (3) on trouve un matériau (20) pas ou peu perméable à la lumière, appliqué de préférence directement sur la plaque (13).

9. Dispositif selon l'une quelconque des revendications 5 à 8, **caractérisé en ce que** des moyens d'éclairage (11) sont intégrés dans la plaque (13).

10. Dispositif selon l'une quelconque des revendications 5 à 9, **caractérisé en ce que** dans la plaque (13) des canaux de vision (17) sont orientés sur le centre de projection (23) du dispositif d'enregistrement d'images (3).

11. Dispositif selon l'une quelconque des revendications précédentes, **caractérisé en ce que** les perforations (16) et les extrémités (7) des broches sont orientées de telle façon qu'en position optimale, les extrémités (7) des broches apparaissent au centre des perforations (16) sur l'image du dispositif d'enregistrement d'images (3).

12. Dispositif selon l'une quelconque des revendications précédentes, **caractérisé en ce que** la représentation des ouvertures (16) et des extrémités (7) des broches sur le dispositif d'enregistrement d'images (3) est télécentrique.

13. Dispositif selon l'une quelconque des revendications 5 à 12, **caractérisé en ce que** des canaux de vision (17) dans la plaque (13) présente une largeur supérieure à celle des perforations (16) du masque (15).

14. Dispositif selon l'une quelconque des revendications 1 à 13, **caractérisé en ce qu'**au moins une, de préférence deux perforations (21) est (sont) ménagé(s) dans la face du masque (15) en regard du dispositif d'enregistrement d'image comme marques de référence, perforations à travers lesquelles de la lumière provenant du dispositif d'éclairage (13) arrive directement dans le moyen d'enregistrement d'images (3).

15. Dispositif selon l'une quelconque des revendications 1 à 14, **caractérisé en ce que** les composants du dispositif, tels que le dispositif d'enregistrement d'images (3), le masque (15) et le dispositif d'éclairage (13) sont reliés mécaniquement entre eux et **en ce qu'**un mouvement relatif est possible entre ces composants reliés mécaniquement et les extrémités (7) des broches à contrôler.

16. Procédé de contrôle d'extrémités (7) de broches (9), de préférence de broches de connexion, notamment au moyen d'un dispositif selon l'une quelconque des revendications 1 à 15, dans lequel on enregistre la position de l'extrémité libre d'au moins une broche, **caractérisé en ce que** l'enregistrement d'une première face d'un masque s'effectue à travers une perforation dans le masque, sur l'autre face duquel la broche se trouve derrière la perforation, et **en ce que** sur cette autre face on procède à un éclairage ou un éclaircissement.

17. Procédé selon la revendication 16, **caractérisé en ce que** l'extrémité libre de la broche est maintenue sombre et que l'on éclaircit une zone de la broche plus éloignée par rapport au masque.

18. Procédé selon la revendication 16, **caractérisé en ce que** l'extrémité libre de la broche est éclairée et éclaircie, et **en ce que** l'on maintient sombre une zone de la broche plus éloignée par rapport au masque.

19. Procédé selon l'une quelconque des revendications 16 à 18, **caractérisé en ce que** la position de la représentation des pointes de broches (7) est estimée par rapport à la représentation des ouvertures (17).

20. Procédé selon l'une quelconque des revendications 16 à 18, **caractérisé en ce que** la position de la représentation des extrémités (7) des broches est estimée par rapport à la représentation d'ouvertures (17) supplémentaires ménagées dans le masque (15).
